# EUROPÄISCHE PATENTSCHRIFT

(11) **EP 1 978 886 B1**
(45) Veröffentlichungstag und Bekanntmachung des Hinweises auf die Patenterteilung: **06.10.2010**
(21) Anmeldenummer: 07722758.5
(22) Anmeldetag: 19.01.2007
(51) Int. Cl.: A61C 9/00

(54) **STECKHÜLSE FÜR EINE STECKVERBINDUNG ZUR BEFESTIGUNG VON ZAHNKRANZ- ODER KIEFERSEGMENTEN**
RECEIVER FOR A PLUG-IN CONNECTION FOR FIXING TOOTH CROWN OR JAW SEGMENTS
CONTACT POUR SYSTEME DE CONNEXION ENFICHABLE PERMETTANT LA FIXATION DE SEGMENTS DE COURONNE DENTAIRE OU DE SEGMENTS DE MACHOIRES

(30) Priorität: 20.01.2006 DE 102006003091; 26.01.2006 DE 102006003946
(43) Veröffentlichungstag der Anmeldung: 15.10.2008
(73) Patentinhaber: Laux, Robert, 71560 Sulzbach/Murr (DE)
(72) Erfinder: Laux, Robert, 71560 Sulzbach/Murr (DE)
(74) Vertreter: Müller, Gottfried
(86) Internationale Anmeldenummer: PCT/EP2007/000449
(87) Internationale Veröffentlichungsnummer: WO 2007/085379

(56) Entgegenhaltungen:
- EP-B1- 1 028 669
- US-A1- 2005 019 723

## Beschreibung

Die Erfindung betrifft eine Steckhülse für eine Steckverbindung zur Befestigung von Zahnkranz- oder Kiefersegmenten nach dem Oberbegriff des Anspruches 1.

In der EP 1 028 669 B1 wird eine Steckverbindung beschrieben, die dazu dient, Zahnkranz- oder Kiefersegmente mit einer Modellbasis zu verbinden. Die Steckverbindung umfasst einen Verbindungsstift und eine Steckhülse, die zur Aufnahme des Verbindungsstiftes ausgebildet und fest in die Modellhasis integriert ist. Der Verbindungsstift ist dagegen fest mit den Zahnkranz- bzw. Kiefersegmenten verbunden. Zur Bearbeitung der Arbeitsmodelle wird der die Segmente tragende Verbindungsstift in die Steckhülse, welche sich in der Modellbasis befindet, eingesteckt. Bei eingestecktem Verbindungsstift ist ein fester Halt der Arbeitsmodelle auf der Modellbasis gegeben, wodurch eine präzise Bearbeitung ermöglicht wird. Durch Herausziehen des Verbindungsstiftes kann die Verbindung wieder gelöst werden, wobei die gewünschte Arbeitsposition auch nach dem Entnehmen der Segmente durch Wiedereinstecken der Verbindungsstifte in die Steckhülsen jederzeit wieder eingenommen werden kann.

Die Steckhülse weist eine zylindrische Mantelfläche auf und besitzt eine Ausnehmung, die über zwei axial beabstandete Abschnitte konisch ausgebildet ist. Auch der Außenmantel des einzusteckenden Verbindungsstiftes weist zwei entsprechende, konusförmige Abschnitte auf, die im eingesteckten Zustand flächig in der Ausnehmung der Steckhülse anliegen. Die konusförmigen, zueinander beabstandeten Abschnitte in der Steckhülse sind über einen zylindrischen Abschnitt miteinander verbunden, welcher dafür sorgt, dass der Schaft des Verbindungsstiftes zur Reduzierung von Reibung nicht über seine gesamte axiale Länge, sondern nur mit seinen konischen Abschnitten an der Innenwandung der Steckhülse flächig anliegt.

Aus der US 2005/0019723 A1 ist eine Steckhülse für eine Steckverbindung zur Befestigung von Zahnkranz- oder Kiefersegmenten auf einer Modellbasis bekannt, wobei die Steckhülse zur Aufnahme eines doppelbeinigen Steckpins ausgeführt ist und zwei parallel zueinander angeordnete Steckausnehmungen aufweist, in die die beiden Beine des Pins einschiebbar sind. Die beiden Steckausnehmungen in der Steckhülse sind vollständig separat voneinander ausgeführt. Die Steckausnehmungen und die Beine des Pins besitzen jeweils einen konusförmigen Querschnitt, was den Vorteil hat, dass eine feste Verbindung zwischen Steckhülse und Pin realisierbar ist. Andererseits besteht aber die Gefahr, dass die einmal geschlossene Verbindung nur mit erhöhtem Kraftaufwand wieder zu lösen ist, wodurch die Gefahr einer Materialschädigung besteht.

Von diesem Stand der Technik ausgehend liegt der Erfindung die Aufgabe zugrunde, eine konstruktiv einfach aufgebaute und leicht herzustellende Steckhülse für eine Steckverbindung zur Befestigung von Zahnkranz- oder Kiefersegmenten auf einer Modellbasis zu schaffen, die die Verwendung eines verhältnismäßig weichen, nachgiebigen Materials für die Steckhülse bei einer zugleich sicheren und festen Verbindung mit dem einzusteckenden Verbindungsstift erlaubt.

Diese Aufgabe wird erfindungsgemäß mit den Merkmalen des Anspruches 1 gelöst. Die Unteransprüche geben zweckmäßige Weiterbildungen an.

Die Steckhülse ist aus einem nichtmetallischen Werkstoff gefertigt, zweckmäßig aus Kunststoff, insbesondere einem Spritzguss-Kunststoff, oder aus Keramik oder einem sonstigen nichtmetallischen Werkstoff, der in der Regel weicher ist als Metall. Die Steckhülse weist zwei Steckausnehmungen zur Aufnahme von zwei nebeneinander (parallel oder winklig) angeordneten Steckschäften eines Verbindungsstiftes auf, wobei die Steckausnehmungen über einen Verbindungsabschnitt miteinander verbunden sind, der sich zumindest über einen Teil der axialen Länge der Steckausnehmungen erstreckt.

Gemäß eines ersten Aspektes der Erfindung ist der Verbindungsabschnitt als schlitzförmige oder schlitzähnliche Ausnehmung ausgebildet und stellt eine ausreichende Nachgiebigkeit der Stückhülse in Radialrichtung sicher, er setzt die Steifigkeit der Steckhülse herab und erlaubt in gewissen Grenzen ein radiales Aufweiten der Steckhülse, wenn die Steckschäfte des Verbindungsstiftes eingesteckt werden. Aufgrund dieses Aufweitens passt sich die Mantelfläche in den Steckausnehmungen an den Außenmantel der eingesteckten Steckschäfte an, wodurch eine zumindest teilweise flächige Verbindung zwischen Ausnehmungen und Steckschäften erreicht wird, was eine feste, reibschlüssige Steckverbindung zur Folge hat. Über das Aufweiten der Steckhülse können insbesondere Abweichungen vom vorgegebenen Maß bei der Herstellung der Steckhülse ausgeglichen werden, was zu einer hohen Fehlertoleranz führt. Fertigungstoleranzen, die bei der Herstellung der Steckhülse auftreten, können ausgeglichen werden. Über das Aufweiten erfolgt eine automatische Anpassung an die einzusteckenden Steckschäfte.

Zwischen den Steckausnehmungen verläuft ein Steg in der Steckhülse, wobei der Verbindungsabschnitt als ein die beiden Steckausnehmungen verbindender Schlitz im Steg ausgeführt ist. Der die beiden Steckausnehmungen jeweils begrenzende Steg sorgt einerseits für eine sichere und präzise Führung der einzusteckenden Steckschäfte des Verbindungsstiftes, da jede Ausnehmung eine sich annähernd um 360° erstreckende Mantelfläche aufweist, die nur im Bereich des schmalen Schlitzes durchbrochen ist..Andererseits sorgt der Schlitz zwischen den Steckausnehmungen für ein Mindestmaß an Nachgiebigkeit und ermöglicht das radiale Aufweiten der Steckhülse. Der Verbindungsabschnitt ist in dieser Ausführung als schlitzförmige Ausnehmung im Steg zwischen den beiden Steckausnehmungen ausgebildet, wobei der Schlitz unterschiedliche Breiten aufweisen kann. So ist es beispielsweise möglich, den Schlitz nur als Trennung des Stegs auszuführen, so dass zwar unter Belastung ein Aufweiten möglich ist, jedoch die einander zugewandten Steghälften im unbelasteten Zustand unmittelbar aneinander liegen. Gemäß einer anderen Ausführung kann der Schlitz auch eine Lücke bilden und so breit ausgebildet sein, dass die Steghälften auch im unbelasteten Zustand auf Abstand zueinander liegen. Auch in diesem Fall werden die Steckschäfte in Umfangsrichtung über einen Winkel größer als 180° von den Steckausnehmungen umschlossen.

Gemäß eines weiteren Aspektes der Erfindung sind an der Innenwandung der Steckhülse nocken- oder noppenförmige Erhebungen vorgesehen, die vorteilhafterweise linienförmig ausgebildet sind und sich insbesondere axial über einen Teilabschnitt der Steckhülse erstrecken können. An diesen nockenförmigen Erhebungen liegt der Außenmantel des eingesteckten Verbindungsstiftes an, wodurch zumindest im Bereich der Erhebungen ein flächiger Kontakt zwischen Innenmantel der Steckhülse und Außenmantel des Verbindungsstiftes und eine damit einhergehend hohe Reibung vermieden wird. Dieser Kontakt an den nockenförmigen Erhebungen wird auch bei einem geringfügigen Verformen der Steckhülse während des Einführens des Verbindungsstiftes aufrecht erhalten. Bei einer Ausführung der Erhebungen als Längskörper besteht ein linienförmiger Kontakt, bei einer kreisförmigen oder punktförmigen Ausführung der Erhebungen ein punktförmiger Kontakt. Aus Gründen einer verbesserten Führung und Stabilität wird jedoch ein linienförmiger Kontakt mit sich in Achsrichtung der Steckhülse erstreckenden, länglichen nockenförmigen Erhebungen bevorzugt. Als Verbindungsabschnitt zwischen den Steckausnehmungen kommt sowohl eine schlitzförmige oder schlitzähnliche Ausnehmung im Sinne einer Lücke in Betracht als auch eine Ausführung in Form einer soliden Brücke oder dergleichen, die sich als feste Verbindung zwischen den beiden Steckausnehmungen erstreckt.

Gemäß einer weiteren vorteilhaften Ausführung kann die Steckhülse axial in zwei verschiedene Abschnitte unterteilt werden: eine benachbart zur Einstecköffnung vorgesehene, im oberen Teil der Steckhülse angeordnete Sockelaufnahme, welche zur Aufnahme eines die beiden Steckschäfte verbindenden Stiftsockels des Verbindungsstifts ausgebildet ist, sowie die sich an die Sockelaufnahme axial anschließenden zwei Steckausnehmungen, in die die beiden Steckschäfte des Verbindungsstifts eingesteckt werden. Der Steg erstreckt sich nur zwischen den Steckausnehmungen, die nockenförmigen Erhebungen sind gemäß einer bevorzugten Ausführung nur an der Innenfläche der Sockelaufnahme angeordnet. Der in die Steckhülse eingesteckte Verbindungsstift ragt mit seinen beiden Steckschäften in die Steckausnehmungen ein, wobei ein flächiger Kontakt zwischen der äußeren Mantelfläche der Steckschäfte und der Innenseite der Steckausnehmungen gegeben ist. Gegebenenfalls ist der flächige Kontakt auf axiale Teilbereiche der Steckausnehmungen beschränkt oder vollständig aufgehoben. Der Stiftsockel des Verbindungsstifts liegt dann in der Sockelaufnahme in der Steckhülse, die äußere Mantelfläche des Stiftsockels hat lediglich einen linienförmigen - gegebenenfalls punktförmigen - Kontakt zu den nockenförmigen Erhebungen auf der Innenseite der Sockelaufnahme in der Steckhülse. Gleichzeitig sind dann Berührpunkte an der Stirnseite an weiteren nockenförmigen Erhebungen vorgesehen.

Es kann zweckmäßig sein, den sich in Achsrichtung zwischen den beiden Steckausnehmungen erstreckenden Steg an der der Einstecköffnung der steckhülse gegenüberliegenden Stirnseite durchgehend auszubilden, so dass an dieser Stirnseite der Steg geschlossen ist. Der Schlitz, der in den Steg eingebracht ist, erstreckt sich in dieser Ausführung nicht vollständig bis zu der Stirnseite der Steghülse und nimmt somit in Achsrichtung gesehen nur eine Teillänge des Stegs ein. Die die beiden Steghälften verbindende Brücke im Bereich der unteren, axialen Stirnseite der Steckhülse verbessert zum einen die Stabilität, zum anderen wird beim Einsetzen der Steckhülse in die Modellbasis ein unerwünschtes Eindringen des Werkstoffes der Modellbasis, in der Regel Gips, in das Innere der Hülse vermieden. Da sich zugleich aber der Schlitz über einen Großteil der axialen Länge des Stegs erstreckt, bleibt der Vorteil bestehen, dass sich die Steckhülse beim Einstecken des Verbindungsstiftes radial aufweiten kann.

Gemäß einer weiteren Ausführung ist es auch möglich, dass die nockenförmigen Erhebungen sich nicht nur im Bereich der Sockelaufnahme, sondern zumindest über Teilabschnitte auch in den Steckausnehmungen befinden. Gemäß einer weiteren Alternative können die nockenförmigen Erhebungen auch ausschließlich in den Steckausnehmungen und nicht im Bereich der Sockelaufnahme vorgesehen sein.

In die äußere Mantelfläche der Steckhülse ist zweckmäßig über die axiale Länge des Stegs eine Einkerbung eingebracht, wodurch die Wandstärke der Steckhülse reduziert und die Dehnfähigkeit in Radialrichtung verbessert wird.

Die beiden Steckausnehmungen in der Steckhülse sind vorteilhaft konusförmig ausgebildet und besitzen insbesondere unterschiedliche Konusdurchmesser, wodurch die Einsteckposition eindeutig festgelegt wird. Zylindrische Steckschäfte und Steckausnehmungen oder eine Kombination von konischen und zylindrischen Abschnitten sind außerdem möglich.

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht eines Verbindungsstiftes, der zur Herstellung einer Steckverbindung mit einer Steckhülse herangezogen wird, wobei über die Steckverbindung ein Zahnkranz- oder Kiefersegment mit einer Modellbasis zu verbinden ist,
- Fig. 2: der Verbindungsstift in einer zweiten Seitenansicht,
- Fig. 3: der Verbindungsstift in einer Draufsicht,
- Fig. 4: der Verbindungsstift in perspektivischer Darstellung,
- Fig. 5: eine Steckhülse mit eingestecktem Verbindungsstift in Seitenansicht,
- Fig. 6: Steckhülse und Verbindungsstift in einer zweiten Seitenansicht,
- Fig. 7: Steckhülse und Verbindungsstift in Draufsicht,
- Fig. 8: die Steckhülse ohne Verbindungsstift in Draufsicht,
- Fig. 9: einen Längsschnitt durch die Verbindungshülse.

In den Figuren sind gleiche Bauteile mit gleichen Bezugszeichen versehen.

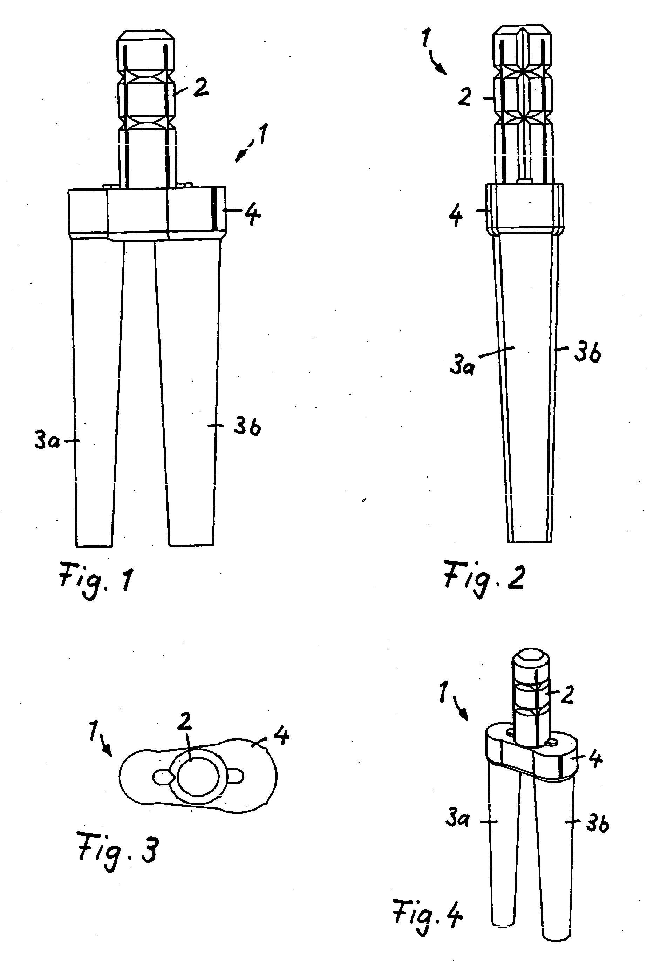

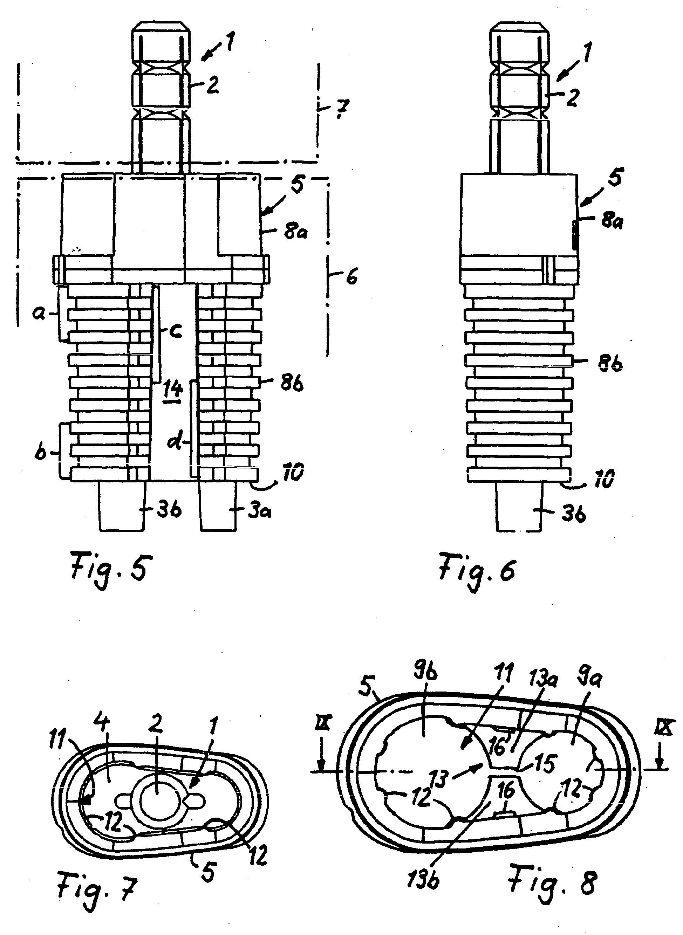

Der in den Figuren 1 bis 4 dargestellte Verbindungsstift 1 wird für Steckverbindungen zur Befestigung von Zahnkranz- oder Kiefersegmenten aus Gips oder ähnlichem Werkstoff auf einer Modellbasis eingesetzt, die in der Regel ebenfalls aus Gips hergestellt wird. Der Verbindungsstift 1 wirkt in der Steckverbindung mit einer Steckhülse zusammen, so wie dies in den Figuren 5 bis 7 dargestellt ist. Der obere Teil des Verbindungsstiftes 1 ist als zylindrischer Fixierschaft 2 ausgeführt, der in ein vorgefertigtes Bohrloch des Zahnkranz- oder Kiefersegments eingesetzt und mit diesem fest verbunden wird, beispielsweise durch Kleben. Der untere Teil des Verbindungsstiftes 1 besteht aus zwei Steckschäften 3a und 3b, die jeweils konusförmig ausgebildet sind, jedoch einen unterschiedlichen Konusdurchmesser aufweisen. Im Ausführungsbeispiel ist der größte Durchmesser des kleineren Steckschaftes 3a kleiner ausgeführt als der größte Durchmesser des größeren Steckschaftes 3b. In entsprechender Weise ist auch der kleinste Durchmesser an der Stirnseite des Steckschaftes 3a kleiner ausgebildet als der kleinste Durchmesser an der Stirnseite des größeren Steckschaftes 3b. In vorteilhafter Ausführung besitzen beide Steckschäfte 3a, 3b die gleiche Konizität.

Der Fixierschaft 2 ist fest an einem Stiftsockel 4 gehalten, der scheibenförmig ausgebildet ist und der an der dem Fixierschaft 2 abgewandten Seite die beiden Steckschäfte 3a, 3b trägt. Der Fixierschaft 2 weist umlaufende Einkerbungen auf, die die Verbindung mit dem Zahnkranz- bzw. Kiefersegment unterstützen. Der Verbindungsstift 1 ist zweckmäßig aus einem metallischen Werkstoff hergestellt.

Wie insbesondere der Draufsicht nach Fig. 3 und der perspektivischen Ansicht nach Fig. 4 zu entnehmen, ist der Umriss des Stiftsockels 4 an die Durchmesser der unterschiedlich großen Steckschäfte 3a und 3b angepasst. Der Durchmesser des nach oben ragenden Fixierschaftes 2 ist näherungsweise so groß wie der Durchmesser des kleineren Steckschaftes 3a.

Die Figuren 5 bis 7 zeigen die Steckverbindung mit in eine Steckhülse 5 eingestecktem Verbindungsstift 1. Die Steckhülse 5 ist fest in eine Modellbasis 6 integriert, die beispielsweise aus Gips hergestellt wird und Träger des Zahnkranz- oder Kiefersegments 7 ist, in die der Fixierschaft 2 des Verbindungsstiftes 1 fest eingebettet ist. Über die Steckverbindung von Verbindungsstift 1 und Steckhülse 5 ist somit das Zahnkranz- bzw. Kiefersegment 7 lösbar mit der Modellbasis 6 zu verbinden.

Die Steckhülse 5 weist einen oberen Abschnitt 8a auf, der eine Sockelaufnahme für den Stiftsockel des Verbindungsstiftes besitzt, und einen unteren Abschnitt 8b, in den zwei nebeneinander liegende Steckausnehmungen 9a und 9b eingebracht sind (Fig. 8), in die die beiden Steckschäfte 3a und 3b des Verbindungsstiftes einzustecken sind. Die beiden Steckausnehmungen 9a und 9b verlaufen parallel zueinander, wobei im Rahmen der Erfindung auch eine winklige Anordnung der beiden Steckausnehmungen zueinander in Betracht kommt. Die Steckschäfte 3a und 3b weisen einen entsprechend parallelen bzw. winkligen Verlauf auf.

Die Steckschäfte 3a und 3b ragen aus der unteren Stirnseite 10 der Steckhülse 5 hervor. Zwischen der äußeren Mantelfläche der Steckschäfte 3a und 3b und der Innenseite der Steckausnehmungen 9a und 9b besteht ein Kontaktbereich, der sich über die gesamte axiale Länge oder auch nur über einen axialen Teilbereich erstrecken kann. Der Kontaktbereich kann auch durch die nockenförmigen Erhebungen gebildet werden. Wie Fig. 5 zu entnehmen, kann sich der Kontaktbereich auf axiale Teilbereiche a und b, die zueinander beabstandet sind, beschränken, wohingegen im zwischen den Teilbereichen a und b liegenden Abschnitt kein Kontakt besteht. Im Ausführungsbeispiel sind die Teilbereiche a und b, in denen Kontakt besteht, im oberen bzw. unteren Abschnitt der Steckausnehmung platziert, wobei gemäß einer alternativen Ausführung auch nur im mittleren Bereich ein Kontakt möglich ist und im oberen und unteren Bereich ein flächiger Kontakt vermieden wird. Desweiteren ist auch Kontaktbereich in unterschiedlichen axialen Abschnitten in der linken und rechten Steckausnehmung möglich, beispielsweise in einem oberen Teilbereich c der ersten Steckausnehmung und in einem unteren Teilbereich d der zweiten Steckausnehmung.

Am Außenmantel des unteren Abschnittes 8b der Steckhülse 5, in den die Steckschäfte des Verbindungsstiftes einzustecken sind, sind Querrillen eingebracht, die für eine bessere Verankerung der Steckhülse in der Modellbasis 6 sorgen. Der obere Abschnitt 8a weist in Achsrichtung einen gleich bleibenden Durchmesser auf, der untere Abschnitt 8b verläuft dagegen geringfügig konisch.

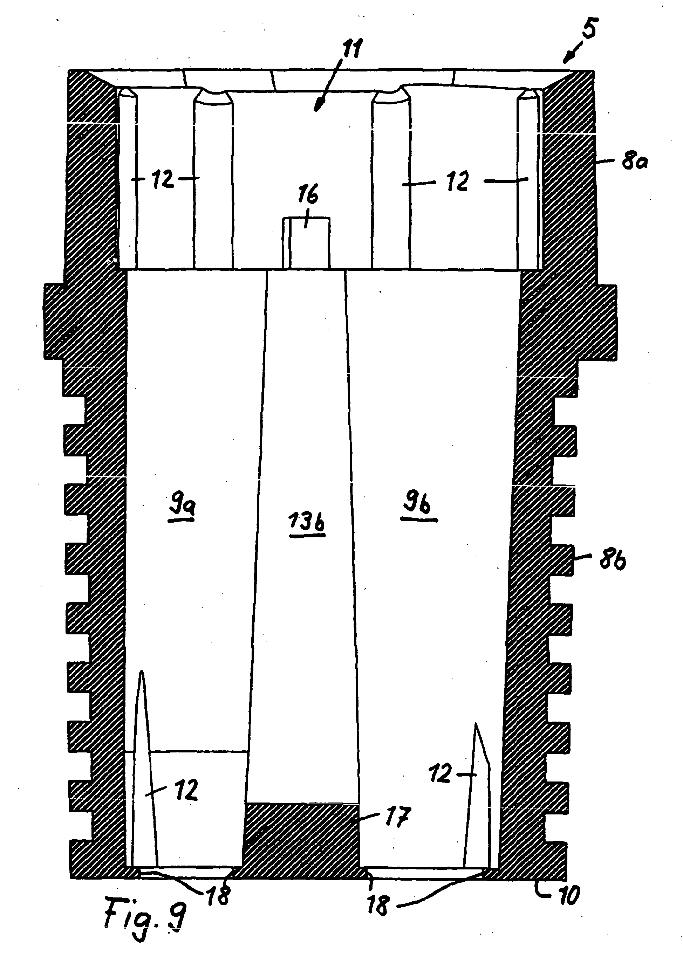

In den Draufsichten nach Fig. 7 und 8 - gemäß Fig. 7 die Draufsicht auf die Steckverbindung mit Steckhülse 5 und Verbindungsstift 1, gemäß Fig. 8 die Draufsicht auf die Steckhülse 5 ohne Verbindungsstift - ist die Sockelaufnahme 11 in der Steckhülse 5 dargestellt, die den Stiftsockel 4 des Verbindungsstiftes 1 aufnimmt. Der Umriss der Sockelaufnahme 11 ist an den Umriss des Stiftsockels 4 angepässt, jedoch sind am Innenmantel der Sockelaufnahme 11 mindestens zwei, vorzugsweise acht oder mehr nockenförmige Erhebungen 12 angeordnet, die in die Steckausnehmungen 9a bzw. 9b einragen und an denen die glatte Mantelfläche des Stiftsockels 4 anliegt. Die nockenförmigen Erhebungen sind längsförmig ausgeprägt und erstrecken sich in Achsrichtung, wie insbesondere Fig. 9 zu entnehmen ist. Dadurch ergibt sich ein linienförmiger Kontakt zwischen jeder nockenförmigen Erhebung und der berührend anliegenden Mantelfläche am Stiftsockel 4. Die nockenförmigen Erhebungen 12 befinden sich ausschließlich in der Sockelaufnahme 11 der Steckhülse 5, nicht jedoch in den Steckausnehmungen 9a und 9b. Gemäß einer alternativen Ausführung kann es aber auch zweckmäßig sein, auch in den Steckausnehmungen insbesondere an der Stirnseite der Hülse zusätzlich zur Sockelaufnahme oder auch ausschließlich in den Steckausnehmungen derartige nockenförmige Erhebungen vorzusehen.

Wie Fig. 5 zu entnehmen, ist in die äußere Mantelfläche der Steckhülse eine in Achsrichtung verlaufende Einkerbung 14 eingebracht. Diese Einkerbung 14 befindet sich auf Höhe eine Steges 13, der sich axial über die Höhe des unteren Abschnittes 8b in der Steckhülse 5 erstreckt und die Wandstärke der Steckhülse reduziert. Die Einkerbung 14 befindet sich gegenüberliegend zu einem Steg 13, der im Inneren der Steckhülse 5 im unteren Abschnitt 8b axial verläuft und sich zwischen den beiden Steckausnehmungen 9a und 9b befindet. Wie insbesondere der Draufsicht nach Fig. 8 zu entnehmen, ist der Steg 13 zweigeteilt und besitzt zwei über einen Schlitz 15 getrennte Steghälften 13a und 13b, die jeweils Bestandteil der Innenwandung der Steckhülse 5 sind. Die Steghälften 13a und 13b ergänzen die Mantelfläche der Steckausnehmungen 9a und 9b zu einem annähernd sich über 360° erstreckenden Innenmantel, der lediglich von dem schmalen Schlitz 15 durchbrochen ist. Aufgrund dieses Schlitzes 15 besitzt die Steckhülse 5 in Radialrichtung eine verbesserte Dehnbarkeit, wobei diese Dehnbarkeit bezogen auf die Längsachse der Steckhülse in beiden radialen Querrichtungen besteht. Aufgrund dieser Dehnbarkeit können Fertigungstoleranzen, die bei der Herstellung der insbesondere aus einem Spritzguss-Kunststoff hergestellten Steckhülse entstehen können, ausgeglichen werden.

Wie den Figuren 8 und 9 des Weiteren zu entnehmen, befindet sich an der Sockelaufnahme 11 unmittelbar oberhalb des Steges 13, der sich axial nur über die Höhe der Steckausnehmungen 9a und 9b erstreckt, ein Begrenzungsanschlag 16, der eine geringere Höhe als der obere Abschnitt 8a der Steckhülse aufweist und die Einschubtiefe des einzusteckenden Verbindungsstiftes begrenzt. An diesem Begrenzungsanschlag 16 gelangt der Stiftsockel 4 des Verbindungsstiftes 1 in Anschlag.

Fig. 9 ist weiters zu entnehmen, dass die beiden Steghälften des Steges 13 im Bereich der unteren Stirnseite 10 der Steckhülse über eine Brücke 17 miteinander verbunden sind. In diesem Bereich sind die beiden Steghälften demnach nicht über den Schlitz separiert. Diese Brücke 17 verbessert zum einen die Stabilität der Steckhülse, zum anderen verhindert sie ein unerwünschtes Eindringen von Gips, wenn die Steckhülse in eine hierfür vorgesehene Bohrung der Modellbasis eingesetzt wird.

An der unteren Stirnseite 10 der Steckhülse 5 sind die Ausnehmungen bzw. Bohrungen für die Steckausnehmungen 9a und 9b von kleinen, den unteren Durchmesser einschränkenden Vorsprüngen 18 begrenzt. Diese den Durchmesser reduzierenden Vorsprünge ermöglichen eine sichere Führung der in die Steckausnehmungen 9a und 9b einzuführenden Steckschäfte 3a und 3b des Verbindungsstiftes 1 und gewährleisten eine zusätzliche Abdichtung gegen das Eindringen von Gips.

## Patentansprüche

1. Steckhülse für eine Steckverbindung zur Befestigung von Zahnkranz- oder Kiefersegmenten auf einer Modellbasis, wobei in eine Steckausnehmung (9a, 9b) der Steckhülse (5) ein Steckschaft (31, 3b) eines Verbindungsstifts (1) lösbar einsteckbar ist,
**dadurch gekennzeichnet,**
**dass** die Steckhülse (5) aus einem nichtmetallischen Werkstoff gefertigt ist und zwei Steckausnehmungen (9a, 9b) zur Aufnahme von zwei parallel angeordneten Steckschäften (3a, 3b) aufweist, wobei zwischen den Steckausnehmungen (9a, 9b) ein Steg (13) verläuft, in den ein als Schlitz (15) ausgebildeter Verbindungsabschnitt (15) eingebracht ist, der die beiden Steckausnehmungen (9a, 9b) miteinander verbindet und der sich zumindest über einen Teil der axialen Länge der Steckausnehmungen (9a, 9b) erstreckt.

2. Steckhülse nach Anspruch 1,
**dadurch gekennzeichnet,**
**dass** die Steckhülse (5)aus Kunststoff, insbesondere Spritzguss-Kunststoff besteht.

3. Steckhülse nach Anspruch 1 oder 2,
**dadurch gekennzeichnet,**
**dass** der Schlitz (15) sich axial nur über eine Teillänge des Stegs (13) erstreckt.

4. Steckhülse nach Anspruch 3,
**dadurch gekennzeichnet,**
**dass** der Steg (13) benachbart zu einer Stirnseite (10) der Steckhülse (5) durchgehend ausgebildet ist.

5. Steckhülse nach einem der Ansprüche 1 bis 4,
**dadurch gekennzeichnet,**
**dass** in die äußere Mantelfläche der Steckhülse (5) über die Länge des Stegs (13) eine Einkerbung (14) zur Reduzierung der Wandstärke eingebracht ist.

6. Steckhülse nach einem der Ansprüche 1 bis 5,
**dadurch gekennzeichnet,**
**dass** die beiden Steckausnehmungen (9a, 9b) im oberen Teil der Steckhülse (5) in eine Sockelaufnahme (11) münden, welche zur Aufnahme eines die beiden Steckschäfte (3a, 3b) verbindenden Stiftsockels (4) des Verbindungsstifts (1) ausgebildet ist.

7. Steckhülse nach einem der Ansprüche 1 bis 5 und 6,
**dadurch gekennzeichnet,**
**dass** der Steg (13) sich axial nur über die Länge der Steckausnehmungen (9a, 9b) erstreckt und dass an der der Sockelaufnahme (11) zugewandten Stirnseite (10) des Stegs (13) ein Begrenzungsanschlag (16) zur Begrenzung der Einschubtiefe des Verbindungsstifts (1) angeordnet ist.

8. Steckhülse nach einem der Ansprüche 1 bis 7,
**dadurch gekennzeichnet,**
**dass** die beiden Steckausnehmungen (9a, 9b) konusförmig ausgebildet sind.

9. Steckhülse nach Anspruch 8,
**dadurch gekennzeichnet,**
**dass** die Steckausnehmungen (9a, 9b) unterschiedliche Konusdurchmesser aufweisen.

10. Steckhülse nach einem der Ansprüche 1 bis 9,
**dadurch gekennzeichnet,**
**dass** in den Außenmantel Querrillen eingebracht sind.

11. Steckhülse nach einem der Ansprüche 1 bis 10,
**dadurch gekennzeichnet,**
**dass** der Schlitz (15) eine Breite von mindestens 1 mm aufweist.

12. Steckhülse nach einem der Ansprüche 1 bis 11,
**dadurch gekennzeichnet,**
**dass**
an der Innenwandung der Steckhülse (5) nockenförmige Erhebungen (12) vorgesehen sind.

13. Steckhülse nach Anspruch 12,
**dadurch gekennzeichnet,**
**dass** die nockenförmigen Erhebungen (12) axial sich über mindestens einen Teilabschnitt der Steckhülse (5) erstrecken.

14. Steckhülse nach Anspruch 12 oder 13,
**dadurch gekennzeichnet,**
**dass** die nockenförmigen Erhebungen (12) nur an der Innenwandung einer Sockelaufnahme (11) angeordnet sind, welche zur Aufnahme eines die beiden Steckschäfte (3a, 3b) verbindenden Stiftsockels (4) des Verbindungsstifts (1) ausgebildet ist.

15. Steckhülse nach Anspruch 12 oder 14,
**dadurch gekennzeichnet,**
**dass** die nockenförmigen Erhebungen (12) nur an der Innenwandung der Steckausnehmungen (9a, 9b) angeordnet sind.

## Claims

1. Receiver for a plug-in connection for fixing tooth crown segments or jaw segments on a model base, wherein a plug-in shaft (3a, 3b) of a connection pin (1) can be plugged releasably into a plug recess (9a, 9b) of the receiver (5), **characterized in that** the receiver (5) is made of a non-metallic material and has two plug recesses (9a, 9b) for receiving two parallel plug-in shafts (3a, 3b), and a web (13) is provided which extends between the plug recesses (9a, 9b) and into which there is formed a connecting portion (15) which is designed as a slit (15) and which connects the two plug recesses (9a, 9b) to each other and extends at least over part of the axial length of the plug recesses (9a, 9b).

2. Receiver according to Claim 1, **characterized in that** the receiver (5) is made of plastic, in particular injection moulding plastic.

3. Receiver according to Claim 1 or 2, **characterized in that** the slit (15) extends axially only over part of the length of the web (13).

4. Receiver according to Claim 3, **characterized in that** the web (13) is designed continuously adjacent to an end face (10) of the receiver (5).

5. Receiver according to one of Claims 1 to 4, **characterized in that** a notch (14) for reducing the wall thickness is formed in the outer jacket surface of the receiver (5) along the length of the web (13).

6. Receiver according to one of Claims 1 to 5, **characterized in that** the two plug recesses (9a, 9b), in the upper part of the receiver (5), open into a base socket (11) which is designed to receive a pin base (4), of the connection pin (1), connecting the two plug-in shafts (3a, 3b).

7. Receiver according to one of Claims 1 to 5 and 6, **characterized in that** the web (13) extends axially over only the length of the plug recesses (9a, 9b), and **in that** a limit stop (16) for limiting the depth of insertion of the connection pin (1) is arranged at the end face (10) of the web (13) directed towards the base socket (11).

8. Receiver according to one of Claims 1 to 7, **characterized in that** the two plug recesses (9a, 9b) are cone-shaped.

9. Receiver according to Claim 8, **characterized in that** the plug recesses (9a, 9b) have different cone diameters.

10. Receiver according to one of Claims 1 to 9, **characterized in that** transverse grooves are formed in the outer jacket.

11. Receiver according to one of Claims 1 to 10, **characterized in that** the slit (15) has a width of at least 1 mm.

12. Receiver according to one of Claims 1 to 11, **characterized in that** cam-shaped elevations (12) are provided on the inner wall of the receiver (5).

13. Receiver according to Claim 12, **characterized in that** the cam-shaped elevations (12) extend axially over at least a partial section of the receiver (5).

14. Receiver according to Claim 12 or 13, **characterized in that** the cam-shaped elevations (12) are provided only on the inner wall of a base socket (11) which is designed to receive a pin base (4), of the connection pin (1), connecting the two plug-in shafts (3a, 3b).

15. Receiver according to Claim 12 or 14, **characterized in that** the cam-shaped elevations (12) are arranged only on the inner wall of the plug recesses (9a, 9b).

## Revendications

1. Contact pour un système de connexion enfichable permettant la fixation de segments de couronne dentaire ou de segments de mâchoires sur une base de modèle, dans lequel une queue enfichable (3a, 3b) d'une tige de connexion (1) peut être enfichée de façon amovible dans une cavité d'enfichage (9a, 9b) du contact (5), **caractérisé en ce que** le contact (5) est fabriqué à partir d'un matériau non métallique et présente deux cavités d'enfichage (9a, 9b) destinées à recevoir deux queues enfichables (3a, 3b) disposées parallèlement, dans lequel une nervure (13) s'étend entre les cavités d'enfichage (9a, 9b), dans laquelle est pratiquée une partie de liaison (15) réalisée sous la forme d'une fente (15), qui relie l'une à l'autre les deux cavités d'enfichage (9a, 9b) et qui s'étend au moins sur une partie de la longueur axiale des cavités d'enfichage (9a, 9b).

2. Contact selon la revendication 1, **caractérisé en ce que** le contact (5) est constitué de matière plastique, en particulier de matière plastique moulée par injection.

3. Contact selon la revendication 1 ou 2, **caractérisé en ce que** la fente (15) ne s'étend axialement que sur une partie de la longueur de la nervure (13).

4. Contact selon la revendication 3, **caractérisé en ce que** la nervure (13) est réalisée sous forme continue à proximité d'une face frontale (10) du contact (5).

5. Contact selon l'une quelconque des revendications 1 à 4, **caractérisé en ce qu'**une entaille (14) destinée à réduire l'épaisseur de paroi est pratiquée sur la longueur de la nervure (13) dans la surface latérale extérieure du contact (5).

6. Contact selon l'une quelconque des revendications 1 à 5, **caractérisé en ce que** les deux cavités d'enfichage (9a, 9b) débouchent dans la partie supérieure du contact (5) dans un logement de socle (11), qui est réalisé de façon à recevoir un socle de tige (4) de la tige de connexion (1) reliant les deux queues enfichables (3a, 3b).

7. Contact selon l'une quelconque des revendications 1 à 5 et 6, **caractérisé en ce que** la nervure (13) ne s'étend axialement que sur la longueur des cavités d'enfichage (9a, 9b) et **en ce qu'**une butée de limitation (16) est disposée sur la face frontale (10) de la nervure (13) tournée vers le logement de socle (11) afin de limiter la profondeur de pénétration de la tige de connexion (1).

8. Contact selon l'une quelconque des revendications 1 à 7, **caractérisé en ce que** les deux cavités d'enfichage (9a, 9b) sont réalisées en forme de cône.

9. Contact selon la revendication 8, **caractérisé en ce que** les cavités d'enfichage (9a, 9b) présentent des diamètres de cône différents.

10. Contact selon l'une quelconque des revendications 1 à 9, **caractérisé en ce que** des rainures transversales sont pratiquées dans la surface latérale extérieure.

11. Contact selon l'une quelconque des revendications 1 à 10, **caractérisé en ce que** la fente (15) présente une largeur d'au moins 1 mm.

12. Contact selon l'une quelconque des revendications 1 à 11, **caractérisé en ce qu'**il est prévu des saillies (12) en forme de cames sur la paroi intérieure du contact (5).

13. Contact selon la revendication 12, **caractérisé en ce que** les saillies en forme de cames (12) s'étendent axialement sur au moins une partie du contact (5).

14. Contact selon la revendication 12 ou 13, **caractérisé en ce que** les saillies en forme de cames (12) ne sont disposées que sur la paroi intérieure d'un logement de socle (11), qui est réalisé de façon à recevoir un socle de tige (4) de la tige de connexion (1) reliant les deux queues enfichables (3a, 3b).

15. Contact selon la revendication 12 ou 14, **caractérisé en ce que** les saillies en forme de cames (12) ne sont disposées que sur la paroi intérieure des cavités d'enfichage (9a, 9b).
